(19) Europäisches Patentamt
European Patent Office
Office européen des brevets

(11) Numéro de publication : **0 475 820 B1**

# (12) FASCICULE DE BREVET EUROPEEN

(45) Date de publication du fascicule du brevet : **04.08.93 Bulletin 93/31**

(51) Int. Cl.$^5$ : **B01J 31/24,** B01J 31/16

(21) Numéro de dépôt : **91402368.4**

(22) Date de dépôt : **04.09.91**

(54) **Nouveaux catalyseurs, procédé de préparation et leur utilisation.**

(30) Priorité : **05.09.90 FR 9011006**

(43) Date de publication de la demande : **18.03.92 Bulletin 92/12**

(45) Mention de la délivrance du brevet : **04.08.93 Bulletin 93/31**

(84) Etats contractants désignés : **AT BE CH DE DK ES FR GB GR IT LI LU NL SE**

(73) Titulaire : **RHONE-POULENC NUTRITION ANIMALE**
**Rue Marcel Lingot**
**F-03600 Commentry (FR)**

(72) Inventeur : **Auvray, Patrick**
**116 avenue des Dahlias**
**F-94240 l'Hay les Roses (FR)**

(74) Mandataire : **Savina, Jacques et al**
**RHONE-POULENC RORER S.A., Direction des Brevets, 20 avenue Raymond Aron**
**F-92160 Antony Cédex (FR)**

EP 0 475 820 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne de nouveaux catalyseurs à base de rhodium et de phosphine, utilisables dans les procédés industriels.

L'invention concerne aussi un procédé de préparation de ces catalyseurs ainsi que leur utilisation, notamment dans des réactions d'hydrogénation de diènes, ou d'addition, sur des diènes, de composés à méthylènes actifs.

Il est connu du brevet français 7622824 publié sous le numéro 2366237, d'utiliser des catalyseurs constitués d'une part par une phosphine soluble dans l'eau, et d'autre part, par un métal de transition, sous forme métallique ou sous forme d'un sel, choisi parmi le palladium, le nickel, le platine, le cobalt et le rhodium, le métal préféré étant le palladium.

Il est encore connu du brevet français 8015355 publié sous le numéro 2486525, d'utiliser pour catalyser l'addition d'un composé à méthylène actif sur un diène conjugué, un catalyseur constitué d'une phosphine soluble dans l'eau et de rhodium. Selon ce brevet, le catalyseur est obtenu à partir d'un sel précurseur, qui peut être le $RhCl_3$, RhBr3, Rh2O, Rh2O3, Rh(NO3)3, Rh(CH3COO)3, $Rh(CH_3COCHCOCH_3)_3$, $[RhCl(\text{cyclooctadiène-1,5})]_2$, $[RhCl(CO)_2]_2$ ou $RhCl_3(C_2H_5NH_2)_3$. Plus particulièrement, les sels utilisés sont $RhCl_3$ et $[RhCl(\text{cyclooctadiène-1,5})]_2$.

Cependant, les catalyseurs décrits dans ces brevets présentent un certain nombre d'inconvénients.

En particulier, certains problèmes résultent de la nature du sel de rhodium précurseur utilisé. En effet, lorsque l'on utilise les sels décrits dans ce brevet précité, seulement 80 à 90 % du rhodium présent se trouve sous une forme aisément complexable et est donc transformé en espèce catalytique. De plus, certaines réactions secondaires d'oxydation des phosphines ont été observées, qui diminuent encore le rendement de cette réaction. Par ailleurs, ces sels précurseurs ne peuvent pas toujours être obtenus sous forme solide ce qui peut se traduire, lors de la formation du complexe, par une forte acidité du milieu réactionnel impliquant une forte consommation de base, et donc une forte teneur du milieu en sels. Enfin, d'autres inconvénients concernant ces sels proviennent de leur faible stabilité, et de leur présence en solution sous forme de plusieurs espèces, difficiles à caractériser et à doser et ayant un comportement variable vis-à-vis de la complexation par la phosphine.

D'autres problèmes proviennent également des performances de ces catalyseurs dans les procédés industriels. Notamment, en raison des coûts importants du rhodium, il est important de pouvoir recycler le catalyseur et de limiter les apports complémentaires en rhodium à chaque cycle. Ce dernier problème n'a pu être résolu de façon satisfaisante par les catalyseurs décrits dans l'art antérieur.

Il a maintenant été trouvé, et c'est ce qui fait l'objet de la présente invention, qu'il est possible d'obtenir de manière industrielle et reproductible, des catalyseurs possédant des performances catalytiques supérieures. Ce résultat particulièrement intéressant est obtenu en utilisant comme sel de rhodium précurseur le perchlorate de rhodium.

Un objet de la présente invention concerne donc de nouveaux catalyseurs caractérisés en ce qu'ils sont constitués d'un atome de rhodium auquel sont liées trois phosphines solubles dans l'eau et d'un contre ion, le contre ion étant le perchlorate.

Les phosphines solubles dans l'eau utilisables dans le cadre de la présente invention sont celles décrites dans le brevet français FR 2 366 237 précité.

Plus particulièrement, on préfère utiliser au moins une phosphine de formule :

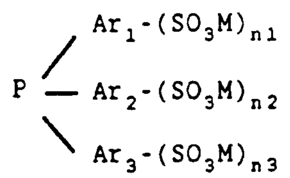

(I)

dans laquelle:

- $Ar_1$, $Ar_2$ et $Ar_3$ identiques ou différents représentent chacun un radical choisi parmi le groupe comprenant les radicaux phénylène et les radicaux naphtylène, ces radicaux étant éventuellement substitués.
- M est un reste cationique d'origine minérale ou organique choisi de manière à ce que la phosphine de formule I soit soluble dans l'eau.
- $n_1$, $n_2$ et $n_3$ identiques ou différents sont des nombres entiers supérieurs ou égaux à 0 et inférieurs ou égaux à 3, l'un au moins étant supérieur ou égal à 1.

Les radicaux phénylène et naphtylène peuvent être substitués par tous radicaux ne contrariant pas la solubilité de la phosphine (I) dans l'eau. Parmi ceux-ci, on peut citer, à titre d'exemples, les radicaux alkyle ayant de 1 à 6 atomes de carbone, les radicaux alkoxy ayant de 1 à 6 atomes de carbone, les atomes d'halogène, les radicaux -OH, -CN, $-NO_2$, $-N-(alkyl)_2$, carboxylates.

De préférence, les catalyseurs selon l'invention sont constitués d'une phosphine de formule (I) dans laquelle $Ar_1$, $Ar_2$ et $Ar_3$, identiques ou différents, représentent chacun un radical choisi parmi le groupe comprenant le radical phénylène et les radicaux phénylène substitués.

Encore plus préférentiellement, on utilise une phosphine dans laquelle au moins un des groupements $SO_3M$ est en position méta sur le noyau benzénique.

De préférence, M est choisi parmi le groupe comprenant les cations des métaux Na, K, Ca, Ba, les ions $NH_4^+$ et ammonium quaternaire comme des ions tétraméthylammonium, tétrapropylammonium et tétrabutyl ammonium.

$n_1$, $n_2$ et $n_3$ sont de préférence égaux à 0 ou 1, $n_1 + n_2 + n_3$ étant compris entre 1 et 3 ($1 \leqq n_1+n_2+n_3 \leqq 3$).

Les composés de formule I plus particulièrement préférés sont la triphénylphosphine métatrisulfonée, la triphénylphosphine métadisulfonée, et la triphénylphosphine métamonosulfonée, dont les formules sont :

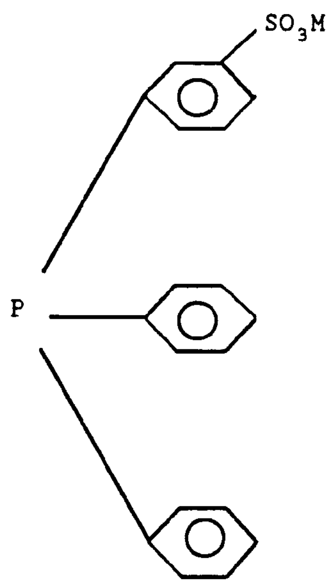

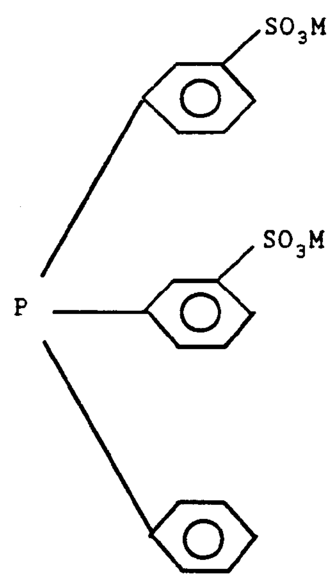

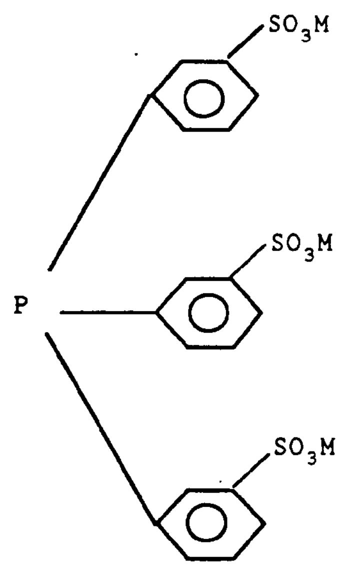

où M a la signification précédente.

On peut citer comme autres exemples de phosphine (I) pouvant être utilisées dans la préparation des catalyseurs selon l'invention les composés suivants : les sels alcalins ou alcalino-terreux, les sels d'ammonium, les sels d'ammonium quaternaires des (p-sulfophényl) diphénylphosphine ; (m-sulfo, p-méthylphényl) di(p-méthylphényl) phosphine ; (m-sulfo-p-méthylphényl) di(p-méthoxyphényl)phosphine ; (m-sulfo, p-chlorophényl)di(p-chlorophényl) phosphine ; di(p-sulfophényl)phénylphosphine ; di(m-sulfo, p-méthylphényl) (p-méthylphényl)phosphine ; di(m-sulfo, p-méthoxyphényl) (p-méthoxyphényl)phosphine ; di(m-sulfo, p-chlorophényl) (p-chlorophényl) phosphine ; tri(p-sulfophényl) phosphine ; tri(m-sulfo, p-méthylphényl) phosphine ; tri(p-sulfophényl)phosphine ; tri(m-sulfo, p-méthylphényl) phosphine ; tri(m-sulfo, p-méthoxyphényl) phosphine ; tri(m-sulfo, p-méthoxyphényl) phosphine ; tri(m-sulfo, p-chlorophényl) phosphine ; (o-sulfo, p-méthyl) (m, m'-disulfo, p-méthyl)phosphine ; (m-sulfophényl) (m-sulfo, p-chlorophényl) (m, m'-disulfo, p-chlorophényl) phosphine.

Un autre objet de la présente invention concerne un procédé de préparation de ces catalyseurs.

Il était connu dans l'art antérieur de préparer du perchlorate de rhodium, et, en particulier, par action directe de l'acide perchlorique sur le chlorure de rhodium (Ayres et coll. J. Inorg. Nucl. Chem. 1957, Vol. 3 p365). Il était également connu de préparer le perchlorate de rhodium en maintenant à ébullition pendant 30 minutes dans l'acide perchlorique, $Na_3RhCl_6$ (Jorgensen, Acta. Chem. Scand. 1956, 10, 500).

Enfin, Shukla a étudié la chimie du perchlorate de rhodium, et analysé les différents produits de la réaction de synthèse (Annales de Chimie, 1961, 1383). Cependant, ces analyses n'ont porté que sur des microquantités du sel, préparées dans des conditions expérimentales de laboratoires, non transposables à l'échelle industrielle. Il en va de même avec les procédés décrits par Ayres et par Jorgensen, qui, pour des raisons de sécurité, ne pourraient en aucun cas être exploités industriellement.

Enfin, rien dans l'art antérieur ne suggérait l'utilisation possible de ce sel du rhodium complexé avec une

phosphine comme catalyseur ni ne permettait cette utilisation, compte tenu des faibles quantités qu'il était possible de préparer.

La présente invention a donc aussi pour objet un procédé de préparation des catalyseurs, selon lequel on effectue les étapes suivantes :

. dans une première étape, on précipite à froid l'hydroxyde de rhodium en présence d'une base,
. dans une deuxième étape, on dissout le précipité ainsi obtenu dans l'acide perchlorique concentré, pour former le perchlorate de rhodium,
. dans une troisième étape facultative, on cristallise le perchlorate de rhodium,
. dans une quatrième étape, on chauffe à reflux le perchlorate de rhodium obtenu en présence d'une phosphine soluble dans l'eau pour former les catalyseurs.

Dans un mode plus particulier de l'invention, la précipitation de l'hydroxyde de rhodium est obtenue au moyen d'une base forte, telle qu'en particulier les bases minérales. De préférence, on utilise la soude, la potasse, ou l'ammoniaque. Notamment, la soude donne de très bons résultats.

Cette précipitation est de préférence réalisée à une température inférieure à 25°C, telle que notamment la température ambiante.

Le précipité obtenu peut ensuite être séparé par centrifugation, puis lavé à l'eau distillée avant de subir l'étape suivante.

La seconde étape consiste à former le perchlorate de rhodium, en mettant le précipité obtenu en solution dans l'acide perchlorique concentré. Avantageusement, la concentration en acide perchlorique est choisie entre 10 et 70 % en poids dans l'eau, et de préférence entre 20 et 40 %.

Il peut être préférable, avant de poursuivre le procédé, de s'assurer que la solution ainsi obtenue renferme une espèce unique du Rh (1 seule bande rapide en électrophorèse). Si tel n'est pas le cas, les deux premières étapes peuvent être répétées.

La troisième étape est une étape facultative qui permet d'améliorer les performances du catalyseur, de diminuer l'acidité du milieu et de faciliter le dosage du sel.

La cristallisation est obtenue par élimination de l'eau contenue dans la solution ainsi obtenue, en soumettant cette dernière à une température comprise entre 20 et 120°C, et de préférence, entre 30 et 80°C, éventuellement sous vide, puis par évaporation supplémentaire sous vide de la solution perchlorique résultante, à une témpérature comprise entre 20 et 170°C, et de préférence, entre 70 et 130°C. Au cours de cette étape, l'acide perchlorique concentré est utilisé pour effectuer les rinçages appropriés.

La qualité des cristaux obtenus peut être contrôlée par électrophorèse sur cellulose comme indiqué dans les exemples.

la dernière étape de ce procédé aboutit aux catalyseurs de l'invention par réduction et complexation du perchlorate de rhodium sur la phosphine soluble dans l'eau. Plus particulièrement, le catalyseur est préparé par chauffage à reflux d'un mélange de perchlorate de rhodium et de phosphine soluble dans l'eau pendant une période de 30 minutes à 10 heures, et de préférence, de 1 à 4 heures. Dans un mode de réalisation préféré de l'invention, la quantité de phosphine est choisie de telle sorte que le nombre d'atomes gramme de phosphore trivalent rapporté à un atome gramme de rhodium soit supérieur ou égal à 4, et de préférence, compris entre 4 et 30.

Pour une bonne mise en oeuvre de l'invention, il peut également être préférable d'effectuer cette dernière étape en milieu inerté, pour limiter l'oxydation parasitaire des phosphines. En particulier, il est avantageux de travailler sous courant d'un gaz inerte, tel l'argon, l'hélium, ou bien l'azote.

Les catalyseurs selon l'invention peuvent être utilisés dans différentes réactions et en particulier dans des réactions d'hydrogénation de diènes, ou d'addition de composés à méthylènes actifs sur des diènes.

Une utilisation particulièrement avantageuse de ces catalyseurs concerne la réaction d'addition d'un composé à méthylène actif de formule X-$CH_2$-Y (III) sur un diène conjugué substitué de formule $CH_2$=C(R)-CH=$CH_2$ (II), selon le schéma réactionnel suivant, décrit dans le brevet FR 2 486 525 précité :

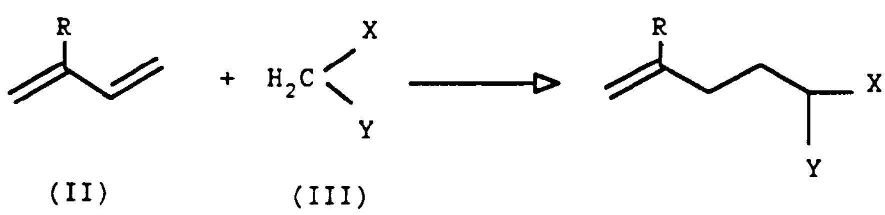

(II) (III)

Dans la formule (II), R représente un radical choisi parmi le groupe comprenant les radicaux alkyle ayant

de 1 à 20 atomes de carbone environ, et les radicaux phényle et naphtyle éventuellement substitués par des radicaux alkyles ayant 1 à 20 atomes de carbone. Dans la formule (III), X et Y, identiques ou différents, sont des groupements électroattracteurs choisis parmi le groupe comprenant les radicaux de formule -CHO, $-COR_1$, $-CO_2R_2$, $-SO_2R_3$, $-CONR_4R_5$, -CN, $-NO_2$ ou $R_1$ $R_2$, $R_3$, $R_4$ et $R_5$ représentent chacun un radical hydrocarboné contenant de 1 à 12 atomes de carbone.

On peut citer comme exemples de composés de formule (II) le myrcène ($R=C_6H_{11}$), l'isoprène ($R=CH_3$) ou le β-farnésène ($R=C_{11}H_{19}$), et comme composés de formule (III), la pentanedione-2,4, l'acétylacétate d'éthyle, l'acétylacétate de méthyle, ou la phénylsulfonyl acétone.

Une manière pratique d'utiliser les catalyseurs consiste à charger dans un réacteur convenable, après l'avoir purgé à l'aide d'un gaz inerte, soit le catalyseur préalablement formé, éventuellement cristallisé, soit les divers composants (phosphine, perchlorate de rhodium). On porte le réacteur à la température de réaction (généralement entre 50 et 150°C) avant ou après l'introduction du composé à méthylène actif, qui lui-même peut être introduit avant, après ou simultanément au diène conjugué substitué. Après arrêt de la réaction, on refroidit à la température ambiante. Le contenu du réacteur est soutiré et on isole ensuite le produit de la réaction qui est en phase organique, en séparant cette dernière de la phase aqueuse contenant le catalyseur, par décantation, et éventuellement par une extraction à l'aide d'un solvant convenable. La solution aqueuse résiduelle peut être recyclée dans le réacteur pour une nouvelle réaction.

On observe avec les catalyseurs de l'invention :

. une cinétique rapide et une grande sélectivité de la réaction, et
. une diminution de 15 à 20 % des appoints en rhodium effectués à chaque cycle dans le cas de recyclages répétés de la phase catalytique.

D'autres objets et avantages de la présente invention apparaîtront à la lecture des exemples qui suivent, qui doit être considérés comme illustratifs et non limitatifs.

EXEMPLE 1 Synthèse du perchlorate de rhodium

Matières premières:

. solution aqueuse de sulfate de rhodium $Rh_2(SO_4)_3$ :
  titre en rhodium : 8,23 à 8,5 %
  titre en $H_2SO_4$ : 0,21 à 0,87 mole/kg
. solution de soude à 30 % min
. solution de soude normale
. eau déminéralisée
. solution d'acide perchlorique à 40 %.

Protocole:

On utilise 24 grammes (compté en métal) d'une solution de sulfate de rhodium. L'acidité de la solution est titrée et on ajoute, sous agitation, une quantité suffisante de soude à 30 % pour ajuster le pH à 7. On amène ensuite le pH à 9 avec de la soude normale. Le précipité obtenu est séparé par centrifugation et lavé dans l'eau distillée. Après une nouvelle centrifugation, on répète l'étape de lavage. Le précipité ainsi obtenu est alors dissout dans l'acide perchlorique à 40 % (q.s.p. une acidité libre finale de l'ordre de 1 mole/kg).

A ce stade, on peut contrôler l'efficacité de la réaction par électrophorèse. Si plusieurs bandes apparaissent, on répète ces deux étapes.

Le perchlorate de rhodium peut être utilisé tel quel pour préparer le catalyseur ou cristallisé préalablement.

Dans ce cas, on effectue une nouvelle dissolution du précipité en ajoutant la stoechiométrie d'acide perchlorique et les jus mères d'une cristallisation précédente.

L'eau de la solution est ensuite évaporée à 80°C sous 0,1-0,01 mmHg, pour obtenir une bouillie cristalline. On laisse alors revenir à température ambiante et cristalliser, pendant une nuit. La suspension obtenue est placée au réfrigérateur puis au congélateur et enfin, filtrée sur fritté n° 4 sous vide éjecteur et sous courant d'azote. Le gâteau est alors rincé avec de l'acide perchlorique à 70 % et les cristaux sont séchés par évaporation sous vide à 80°C de l'acide perchlorique qu'ils contiennent.

Ce procédé nous a permis d'obtenir 95,2 g de perchlorate pur, correspondant à 19,24 g de rhodium.

La qualité des cristaux peut être contrôlée par électrophorèse sur papier. A cet effet, on utilise avantageusement comme révélateur une solution tamponnée d'eau de javel, et comme électrolyte, préférentiellement, une solution d'acide perchlorique 0,1 N. On imprègne une bande de papier Whatman avec 20 ml d'électrolyte, puis on la sèche entre deux feuilles de buvard. On dépose alors sur la largeur de la bande 0,1 à 0,8 mg de Rh,

et on introduit la bande sur la cuve d'électrophorèse. Après mise sous tension (300 V, 30 min), on pulvérise le révélateur, et les différentes espèces de Rh apparaissent en bleu.

Les cristaux obtenus peuvent être conservés sous azote.

EXEMPLE 2 Synthèse du catalyseur

Matères premières :

. cristaux de perchlorate de rhodium obtenus dans l'exemple 1
. solution aqueuse de phosphine (origine Ruhrchemie)

Protocole

La préparation du catalyseur peut se faire directement à partir du sel, sans apport d'acidité supplémentaire, le taux de complexation étant quantitatif.

Exemple 2.1

On introduit dans un réacteur en verre de 0,5 l muni d'une agitation et d'un thermomètre, préalablement purgé à l'azote, 250 g d'une solution de TPPTS (triphényl phosphine,métatrisulfonée) à 0,535 mole/kg et 33 % d'extrait sec, soit 133,75.$10.^{-3}$ mole de TPPTS.

La solution est mise sous agitation. Le réacteur est ensuite chauffé à reflux à 100°C pendant une heure, tout en distillant de l'eau et en dégazant à l'azote. On ajoute alors 9,734 g de cristaux de perchlorate de rhodium pur, soit 19,11.$10^{-3}$ atome gramme de Rh, tout en maintenant l'agitation. On chauffe à reflux à 100°C pendant 6 heures, tout en distillant de l'eau et en dégazant à l'azote. Le réacteur est ensuite purgé et rincé avec une quantité d'eau distillée permettant d'avoir la teneur en Rh voulue. Le catalyseur obtenu peut être conservé dans cet état sous azote. Le rendement de la réaction est de 100 %.

Exemple 2.2

On procède comme dans l'exemple 2.1, mais cette fois en introduisant 401,25.10-3 moles de TPPTS, pour le même nombre d'atome gramme de rhodium (rapport P/Rh = 21). Le rendement en catalyseur est de 100 %.

Exemple 2.3

On procède comme dans l'exemple 2.1 mais en présence de TPPDS (triphénylphosphine métadisulfonée). Le rapport P/Rh = 7. Le rendement en catalyseur est de 100 %.

EXEMPLE 3

Cet exemple comparatif démontre les avantages du perchlorate de rhodium par rapport à d'autres sels précurseurs. Dans chaque cas (sulfate, trichlorure, nitrate, acétate, perchlorate), le mode opératoire suivi est identique à celui décrit dans l'exemple 2. La phosphine utilisée est la TPPTS. Les rendements en rhodium complexé et en espèce active sont donnés dans le tableau suivant.

| SEL | P/Rh | % Rh complexé | % E A |
|---|---|---|---|
| Sulfate de Rh | 7<br>21 | 80 - 90<br>80 - 90 | 100<br>100 |
| Trichlorure de Rh | 5(C)<br>21(C) | 0<br>94 | -<br>100 |
| Nitrate de Rh | 7 | 0 | - |
| Acétate de Rh | 5(C)<br>5(C)<br>21(C) | ≃ 100<br>≃ 100<br>≃ 100 | 38<br>54<br>30 |
| Perchlorate de Rh | 7(NC)<br>7(C)<br>21 | 100<br>100<br>100 | 100<br>100<br>100 |

C = Cristallisé

NC = Non Cristallisé

% EA % en Espèce Active = rapport moles d'espèce active sur mole de Rh complexé

EXEMPLE 4

Etude de l'influence de l'acidité de la solution de sel de rhodium sur les réactions parasitaires d'oxydation des phosphines. Ces essais ont été réalisés dans les conditions suivantes :

(a) dans le cadre d'une réaction de préparation du catalyseur, pendant 6 heures à reflux avec un rapport P/Rh = 7, et

(b) après stockage de la solution catalytique pendant 6 jours à 80°C.

par simulation de l'acidité libre au moyen d'acide sulfurique (pour le sulfate de rhodium) ou d'acide perchlorique (pour le perchlorate de rhodium). Les résultats sont rassemblés dans le tableau ci-dessous.

| Acidité libre [H +] | % PO (a) | % PO (b) |
|---|---|---|
| 0 | ≃ 10 | nd . |
| 0,4 | 25 | 59,7 |
| 1,3 | 30,3 | 69,7 |
| 3 | 35,7 | 100 |
| 5 | nd | nd |

% PO = % Phosphine Oxydée

nd = Non Déterminée

Dans le cas du nitrate et du chlorure de rhodium, les cinétiques d'oxydation sont encore plus rapide, la totalité de la phosphine pouvant être oxydée en 6 heures.

Aussi bien à la préparation qu'au stockage, ces résultats vont dans le sens de l'utilisation de solutions de sel de rhodium peu acides. Compte tenu de l'absence totale d'acidité libre obtenue avec le perchlorate de rhodium, sous forme cristallisée de préférence, ces résultats démontrent les avantages de ce sel par rapport à ceux antérieurement décrits.

EXEMPLE 5

Cet exemple illustre l'utilisation des catalyseurs selon l'invention pour catalyser l'addition d'un composé à méthylène actif sur un diène conjugué substitué.

Exemple 5.1 : Description d'une réaction isolée

Cet exemple montre l'efficacité des catalyseurs dans une réaction d'addition de l'acétylacétate de méthyle sur le myrcène.

Dans un réacteur en verre de 1 l muni d'une agitation centrale, d'un thermomètre et d'un réfrigérant, et préalablement purgé à l'azote, on introduit 296,05 g de solution aqueuse de catalyseur, soit 3,448.10-3 moles de rhodium. On ajoute ensuite sous agitation 178,09g de myrcène à 76,5 %, 151,70 g d'acéylacétate de méthyle à 99,5 %, et 83,8 g de méthanol. On chauffe à 90°C pendant 165 minutes, puis on baisse la température à 75°C avant de stopper l'agitation pour permettre la décantation. On refroidit alors jusqu'à température ambiante, et on sépare les phases aqueuses et organiques à 20°C.

Après analyse de la phase organique, on détermine le rendement :

. Taux de transformation du myrcène : > 99 %
. Rendement en β-cétoester : > 98 %
. Sélectivité : 99 %

Exemple 5.2 : Utilisation dans un procédé avec recyclages

Cet exemple illustre les avantages des catalyseurs de l'invention par rapport à ceux de la technique antérieure, lorsqu'ils sont utilisés dans des procédés avec recyclages. Plus précisément, cet exemple montre la diminution des apports complémentaires en rhodium lors de chaque cycle de la réaction lorsque l'on utilise les catalyseurs de l'invention.

A la fin de la réaction décrite dans l'exemple 5.1, la phase aqueuse résiduelle contenant le catalyseur est recyclée dans le réacteur, pour catalyser une nouvelle réaction. Ce recyclage est répété à la fin de chaque réaction, avec, à chaque cycle, la nécessité d'effectuer un apport complémentaire en catalyseur. Les résultats présentés dans le tableau suivant montrent que, pour un taux de transformation de myrcène stationnaire supérieur, les apports complémentaires en catalyseur de l'invention (et donc en rhodium) sont inférieurs, d'environ 10 %.

| Sel de Rhodium | TT Stat. | Appoint (g de Rh) |
|---|---|---|
| Sulfate | 96 % | 60 |
| Perchlorate | 98 % | 50 |

## Revendications

1. Catalyseurs caractérisés en ce qu'ils sont constitués d'un atome de rhodium auquel sont liées trois phosphines solubles dans l'eau et d'un contre ion, le contre ion étant le perchlorate.

2. Catalyseur selon la revendication 1 caractérisé en ce que la phosphine soluble dans l'eau est choisie de préférence parmi la triphénylphosphine métatrisulfonée, la triphénylphosphine métadisulfonée, et la triphénylphosphine métamonosulfonée.

3. Procédé de préparation des catalyseurs selon les revendications précédentes caratérisé en ce que l'on effectue les étapes suivantes :
   dans une première étape, on précipite à froid l'hydroxyde de rhodium en présence d'une base,
   dans une deuxième étape, on dissout le précipité ainsi obtenu dans l'acide perchlorique concentré pour former le perchlorate de rhodium,
   dans une troisième étape facultative, on cristallise le perchlorate de rhodium;
   dans une quatrième étape, on chauffe à reflux le perchlorate de rhodium obtenu en présence d'une phosphine soluble dans l'eau pour former les catalyseurs.

4. procédé selon la revendication 3 caractérisé en ce que la précipitation est effectuée au moyen d'une base forte choisie parmi les bases minérales

5. Procédé selon la revendication 4 caractérisé en ce que la base est choisie parmi la soude, la potasse et l'ammoniaque.

6. Procédé selon les revendications 3 à 5 caractérisé en ce que la précipitation est effectuée à une température inférieure à 25°C environ, et de préférence à la température ambiante.

7. Procédé selon la revendication 3 caractérisé en ce que le précipité est dissout dans l'acide perchlorique dont la concentration est choisie entre 10 % et 70 % en poids dans l'eau, et de préférence entre 20 % et 40 %

8. Procédé selon la revendication 3 caractérisé en ce que la cristallisation du perchlorate de rhodium est effectuée à une température comprise entre 20 et 120°C, et de préférence, entre 30 et 80°C, éventuellement sous vide, puis par évaporation supplémentaire sous vide de la solution perchlorique résultante, à une température comprise entre 20 et 170°C, et de préférence, entre 70 et 130°C.

9. Procédé selon la revendication 3 caractérisé en ce que, dans la dernière étape, la quantité de phosphine est choisie de telle sorte que le nombre d'atomes gramme de phosphine trivalent rapporté à 1 atome gramme de rhodium soit supérieur ou égal à 4, et de préférence, compris entre 4 et 30.

10. Procédé selon les revendications 3 et 9 caractérisé en ce que le mélange de perchlorate de rhodium et de phosphine soluble dans l'eau est maintenu à la température de reflux pendant une période de 30 minutes à 10 heures, et de préférence, de 1 à 4 heures.

11. Utilisation des catalyseurs selon l'une des revendications 1 ou 2 pour catalyser l'hydrogénation de diènes, ou l'addition de composés à méthylènes actifs sur des diènes.

12. Utilisation selon la revendication 11, pour catalyser l'addition d'un composé à méthylène actif de formule X-$CH_2$-Y (III) sur un diène conjugué substitué de formule $CH_2$=C(R)-CH=$CH_2$ (II), dans lesquelles
R représente un radical choisi parmi le groupe comprenant les radicaux alkyle ayant de 1 à 20 atomes de carbone environ, et les radicaux phényle et naphtyle éventuellement sulbstitués par des radicaux alkyles ayant 1 à 20 atomes de carbone, et
X et Y, identiques ou différents, sont des groupements électroattracteurs choisis parmi le groupe comprenant les radicaux de formule -CHO, -$COR_1$, -$CO_2R_2$, -$SO_2R_3$, -$CONR_4R_5$, -CN, -$NO_2$ où $R_1$, $R_2$, $R_3$, $R_4$ et $R_5$ représentent chacun un radical hydrocarboné contenant de 1 à 12 atomes de carbone.

13. Utilisation selon la revendication 12 caractérisée en ce que les composés de formule (II) sont choisis parmi le myrcène (R=$C_6H_{11}$), l'isoprène (R=$CH_3$) ou le β-farnésène (R=$C_{11}H_{19}$).

14. Utilisation selon la revendication 12 caractérisée en ce que les composés de formule (III) sont choisis parmi la pentanedione-2,4, l'acétylacétate d'éthyle, l'acétylacétate de méthyle ou la phénylsulfonyl acétone.

15. Utilisation selon l'une des revendications 11 à 14 pour la préparation de β-cétoesters.

## Patentansprüche

1. Katalysatoren, dadurch gekennzeichnet, daß sie aus einem Rhodiumatom, an das drei in Wasser lösliche Phosphine gebunden sind, und aus einem Gegenion bestehen, wobei das Gegenion das Perchlorat ist.

2. Katalysator gemäß Anspruch 1, dadurch gekennzeichnet, daß das in Wasser lösliche Phosphin vorzugsweise unter metatrisulfoniertem Triphenylphosphin, metadisulfoniertem Triphenylphosphin und metamonosulfoniertem Triphenylphosphin ausgewählt ist.

3. Verfahren zur Herstellung von Katalysatoren gemäß den vorhergehenden Ansprüchen, dadurch gekennzeichnet, daß man die folgenden Stufen durchführt:
in einer ersten Stufe fällt man in der Kälte Rhodiumhydroxid in Anwesenheit einer Base aus;
in einer zweiten Stufe löst man den so erhaltenen Niederschlag in konzentrierter Perchlorsäure, um das Rhodiumperchlorat zu bilden;
in einer fakultativen dritten Stufe kristallisiert man das Rhodiumperchlorat;
in einer vierten Stufe erhitzt man das erhaltene Rhodiumperchlorat in Anwesenheit eines in Wasser löslichen Phosphins zum Rückfluß, um die Katalysatoren zu bilden.

4. Verfahren gemäß Anspruch 3, dadurch gekennzeichnet, daß die Ausfällung mit Hilfe einer starken Base, ausgewählt unter den mineralischen Basen, durchgeführt wird.

5. Verfahren gemäß Anspruch 4, dadurch gekennzeichnet, daß die Base unter Natronlauge, Kalilauge und Ammoniak ausgewählt wird.

6. Verfahren gemäß den Ansprüchen 3 bis 5, dadurch gekennzeichnet, daß die Ausfällung bei einer Temperatur von geringer als etwa 25°C, vorzugsweise bei Raumtemperatur, durchgeführt wird.

7. Verfahren gemäß Anspruch 3, dadurch gekennzeichnet, daß der Niederschlag in Perchlorsäure gelöst wird, deren Konzentration zwischen 10 und 70 Gew.-% in Wasser und vorzugsweise zwischen 20 und 40 % gewählt wird.

8. Verfahren gemäß Anspruch 3, dadurch gekennzeichnet, daß die Kristallisation des Rhodiumperchlorats bei einer Temperatur zwischen 20 und 120°C und vorzugsweise zwischen 30 und 80°C gegebenenfalls unter Vakuum und anschließend durch zusätzliche Verdampfung unter Vakuum der entstandenen Perchlorsäurelösung bei einer Temperatur zwischen 20 und 170°C und vorzugsweise zwischen 70 und 130°C

durchgeführt wird.

9. Verfahren gemäß Anspruch 3, dadurch gekennzeichnet, daß bei der letzten Stufe die Phosphinmenge derart gewählt wird, daß die Anzahl der Gramm-Atome an dreiwertigem Phosphin, bezogen auf 1 Gramm-Atom Rhodium, höher oder gleich 4 und vorzugsweise zwischen 4 und 30 beträgt.

10. Verfahren gemäß den Ansprüchen 3 und 9, dadurch gekennzeichnet, daß das Gemisch von Rhodiumperchlorat und in Wasser löslichem Phosphin bei Rückflußtemperatur während einer Zeitdauer von 30 Minuten bis zu 10 Stunden, vorzugsweise 1 bis 4 Stunden, gehalten wird.

11. Verwendung der Katalysatoren gemäß einem der Ansprüche 1 oder 2 für die Katalyse der Hydrierung von Dienen oder die Addition von Verbindungen mit aktiven Methylenen an Diene.

12. Verwendung gemäß Anspruch 11 für die Katalyse der Addition einer Verbindung mit aktivem Methylen der Formel $X\text{-}CH_2Y$ (III) an ein substituiertes, konjugiertes Dien der Formel $CH_2=C(R)\text{-}CH=CH_2$ (II), worin

R einen Rest, ausgewählt unter den Alkylresten mit etwa 1 bis 20 Kohlenstoffatomen und den Phenyl- und Naphthylresten, welche gegebenenfalls durch Alkylreste mit 1 bis 20 Kohlenstoffatomen substituiert sind, bedeutet; und

X und Y, identisch oder voneinander verschieden, elektronenanziehende Gruppen, ausgewählt unter den Resten der Formel -CHO, $-COR_1$, $-CO_2R_2$, $-SO_2R_3$, $-CONR_4R_5$, -CN, $-NO_2$ sind, worin $R_1$, $R_2$, $R_3$, $R_4$ und $R_5$ jeweils einen 1 bis 12 Kohlenstoffatome aufweisenden Kohlenwasserstoffrest bedeuten.

13. Verwendung gemäß Anspruch 12, dadurch gekennzeichnet, daß die Verbindungen der Formel (II) unter Myrcen ($R=C_6H_{11}$), Isopren ($R=CH_3$) oder β-Farnesen ($R=C_{11}H_{19}$) ausgewählt sind.

14. Verwendung gemäß Anspruch 12, dadurch gekennzeichnet, daß die Verbindungen der Formel (III) unter Pentan-2,4-dion, Ethylacetylacetat, Methylacetylacetat oder Phenylsulfonylaceton ausgewählt sind.

15. Verwendung gemäß einem der Ansprüche 11 bis 14 für die Herstellung von β-Ketoestern.

## Claims

1. Catalysts characterised in that they consist of a rhodium atom to which three water-soluble phosphines are bonded, and a counterion, the counterion being perchlorate.

2. Catalyst according to Claim 1, characterised in that the water-soluble phosphine is preferably chosen from meta-trisulphonated triphenylphosphine, meta-disulphonated triphenylphosphine and meta-monosulphonated triphenylphosphine.

3. Process for the preparation of the catalysts according to the preceding claims, characterised in that the following steps are carried out:

in a first step, rhodium hydroxide is precipitated cold in the presence of a base,

in a second step, the precipitate thus obtained is dissolved in concentrated perchloric acid in order to form rhodium perchlorate,

in an optional third step, the rhodium perchlorate is crystallised, and

in a fourth step, the rhodium perchlorate obtained is heated to reflux in the presence of a water-soluble phosphine in order to form the catalysts.

4. Process according to Claim 3, characterised in that the precipitation is carried out using a strong base chosen from inorganic bases.

5. Process according to Claim 4, characterised in that the base is chosen from sodium hydroxide, potassium hydroxide and aqueous ammonia.

6. Process according to Claims 3 to 5, characterised in that the precipitation is carried out at a temperature below about 25°C, and preferably at ambient temperature.

7. Process according to Claim 3, characterised in that the precipitate is dissolved in perchloric acid, the concentration of which is chosen between 10 % and 70 % by weight in water, and preferably between 20 %

and 40 %.

8. Process according to Claim 3, characterised in that the crystallisation of the rhodium perchlorate is carried out at a temperature of between 20 and 120°C and preferably between 30 and 80°C, if appropriate under vacuum, followed by supplementary evaporation under vacuum of the resulting perchloric solution, at a temperature of between 20 and 170°C and preferably between 70 and 130°C.

9. Process according to Claim 3, characterised in that, in the final step, the amount of phosphine is chosen such that the number of gram atoms of trivalent phosphorus relative to 1 gram atom of rhodium is greater than or equal to 4, and preferably between 4 and 30.

10. Process according to Claims 3 and 9, characterised in that the mixture of rhodium perchlorate and water-soluble phosphine is kept at the reflux temperature for a period of from 30 minutes to 10 hours and preferably of from 1 to 4 hours.

11. Use of the catalysts according to one of Claims 1 or 2 to catalyse the hydrogenation of dienes or the addition of compounds containing active methylene groups to dienes.

12. Use according to Claim 11, to catalyse the addition of a compound containing an active methylene group, of the formula $X\text{-}CH_2\text{-}Y$ (III) to a substituted conjugated diene of formula $CH_2=C(R)\text{-}CH=CH_2$ (II), in which formulae

R represents a radical chosen from the group comprising alkyl radicals having from 1 to 20 carbon atoms approximately and phenyl and naphthyl radicals, which may be substituted by alkyl radicals having from 1 to 20 carbon atoms and

X and Y, which may be identical or different, are electron-attracting groups chosen from the group comprising the radicals of formula -CHO,
$-COR_1$, $-CO_2R_2$, $-SO_2R_3$, $-CONR_4R_5$, -CN, or $-NO_2$, where $R_1$, $R_2$, $R_3$, $R_4$ and $R_5$ each represent a hydrocarbon radical containing from 1 to 12 carbon atoms.

13. Use according to Claim 12, characterised in that the compounds of formula (II) are chosen from myrcene ($R=C_6H_{11}$), isoprene ($R=CH_3$) or β-farnesene ($R=C_{11}H_{19}$).

14. Use according to Claim 12, characterised in that the compounds of formula (III) are chosen from 2,4-pentanedione, ethyl acetylacetate, methyl acetylacetate and phenylsulphonylacetone.

15. Use according to one of Claims 11 to 14 for the preparation of β-ketoesters.